# EUROPEAN PATENT APPLICATION

(11) **EP 3 263 300 A1**
(43) Date of publication of application: **03.01.2018**
(21) Application number: 16176354.5
(22) Date of filing: 27.06.2016
(51) Int. Cl.: B28B 1/00, B29C 67/00, B22F 3/105

(54) **COATING MECHANISM AND APPARATUS FOR ADDITIVE MANUFACTURING**

(71) Applicant: Siemens Aktiengesellschaft, 80333 München (DE)
(72) Inventor: Lebed, Yaroslav, 13629 Berlin (DE)

(57) **Abstract**

The present invention relates to a coating mechanism (100) for additive manufacturing comprising a suspension (1), and a set of coating elements (2, 2a, 2b) which are arranged and configured to coat a manufacturing plane (MP) with a base material for the additive manufacture, wherein the coating elements are coupled to the suspension such that the coating elements are independently deflectable, from a coating position into a deflection position, when, in an operation of the coating mechanism (100), the respective coating element collides with an obstacle (OBS) in the manufacturing plane (MP).

## Description

The present invention relates to a coating mechanism for additive manufacturing a component and a corresponding apparatus comprising said coating mechanism. Further, the present invention relates to a device comprising the apparatus.

The mentioned "component" may be any ceramic or metallic components. Preferably, the component describes a component applied in the flow path of turbo machines, such as gas turbines.

The term "additive" in the context of manufacturing shall particularly denote a layer-wise, generative and/or bottom-up manufacturing process. The additive manufacturing as described herein may be or relate to rapid prototyping.

The term "additive manufacturing" as described herein preferably pertains to powder bed manufacturing methods.

Powder bed manufacturing methods such as selective laser melting or selective laser sintering are relatively well known methods for fabricating, prototyping or manufacturing parts or components from powder material, for instance. Conventional apparatuses or setups for such methods usually comprise a manufacturing or build platform on which the component is built layer-by-layer after the deposition (coating) of a layer of base material which may then be melted, e.g. by the energy of a laser beam and subsequently solidified. The layer thickness is determined by a coater or coating mechanism that moves, e.g. automatically, over the powder bed and removes excess material. Typical layer thicknesses amount to 20 µm or 40 µm. During the manufacture, said laser beam scans over the surface and melts the powder on selected areas which may be predetermined by a CAD-file according to the geometry of the component to be manufactured.

A method of additive manufacturing is known from EP 2 910 362 A1, for example.

Particularly when a new powder layer is to be coated, i.e. deposited, e.g. onto the manufacturing plane or powder surface by means of a coater or coating blade, it may occur that - due to e.g. thermal deformation of the component to be manufactured - the coater collides with said component. This is because, said part or component may raise above or protrude over the manufacturing plane and pose a risk for the coater to collide with the part and thus cause damage to the whole device or system for. Additionally or alternatively, said collision may result to build-job failure and consequently to rejection of the part a component.

Currently in SLM process, powder is delivered and spread ("coated", "deposited", "distributed") on the building plate or platform with one of the types of coaters as described in the following.

A solid straight metallic, non-movable and/or non-flexible knife-blade coater is known. As a drawback, this coater is intolerant to the "obstacles" in its range of movement, for example when a part deforms and rises above the powder surface as described. Thus, the part forms an obstacle in the manufacturing plane with which the coater is likely to collide with.

Further, a solid straight polymeric and non-movable and non-flexible knife-blade is used. As a disadvantage, this coater is intolerant to obstacles as well, for example when a part deforms and raises up above the powder surface as described. As a consequence, the collision with the part results in build-job failure through either build-job interruption or due to coater damage and subsequent non-uniform powder deposition by the damaged coater blade. Also, parts of the blade may fall off and pollute or contaminate the powdery base material. Still further, this blade cannot be used for high-temperature processes.

A solid straight polymeric and flexible knife-blade also forms prior art, wherein, however, this coater may - though being tolerant to the obstacles - cause contamination of the powder with polymeric material of the coater as any collision with the part may result in the abrasion of the blade. Also, this blade cannot be used for high-temperature processes.

Further, superalloy "brush" may be present in the prior art, particularly in the field of additive manufacturing of turbine components. Although this may be somewhat functional, said brush coater is expensive and may result in a certain layer roughness due to the brush-like geometry.

Brushes made of steel may on the other hand also pose the risk of powder contamination due to the differences in the composition between the coater and the e.g. turbine component to be additively manufactured. Contamination may result in microstructural defects and the destruction of the desired material properties, such as rupture and creep stress durability. The same holds true for any polymeric brush coater.

It is thus an object of the present invention to overcome the described drawbacks and provide for an improved coater and/or coating mechanism and/or a corresponding apparatus or device for additive manufacturing.

The mentioned object is achieved by the subject-matters of the independent claims. Advantageous embodiments are subject-matter of the dependent claims.

An aspect of the present invention pertains to a coating mechanism for additive manufacturing, e.g. the manufacture of gas turbine components comprising a suspension, such as a bar and a set of, preferably single, coating elements which are arranged and configured to coat, overcoat or deposit a manufacturing plane, e.g. comprising a powder surface, with the base material for the additive manufacture, such as a powder.

The "manufacturing plane" preferably denotes a plane (orthogonal to a buildup axis) of the component to be manufactured in which the tip or outermost section of the component is arranged.

The suspension may denote any arrangement at which the coating elements may be fixed for a reliable coating of the manufacturing plane with new base material. E.g., the suspension may be computer-controlled and movable over the manufacturing plane.

Said manufacturing plane may be defined by a corresponding powder bed and/or an apparatus or device for the additive manufacture. Said base material which is to be deposited onto the manufacturing plane is preferably distributed in portions and/or layerwise.

The coating elements, preferably each of which, are independently deflectable and/or rotatable or movable with respect to another coating element, from a coating position into a deflection position, when, in an operation of the coating mechanism, the respective coating element collides with an obstacle in the manufacturing plane.

In an embodiment, a coating element, preferably each of the coating elements of the coating mechanism, is configured non-flexible, e.g. as a consequence of its shape and/or aspect ratio. In other words, each coating element may be a rigid component. Thus, the coating mechanism is preferably not a brush.

The mentioned "obstacle" preferably pertains to a part of the component which has already been to be manufactured, wherein the protrusion over or above the manufacturing plane may be caused by an erroneous buildup and/or unwanted thermal expansion of the component (buildup failure). Thus, the obstacle is preferably a rigid obstacle e.g. an obstacle which would cause damage to the coater and/or the additive manufacturing system in case that the coater would not be embodied obstacle-tolerant as described herein.

As an advantage, the coating mechanism may be configured such that a coating operation for the additive manufacture may be embodied obstacle-tolerant. Moreover, the coating mechanism may be configured robust, temperature durable and easy to repair, e.g. a single coating element may be replaced by a new one when it is damaged in an operation. Further, the single coating elements may be manufactured from the same material (base material) as the component to be additively manufactured, thus preventing powder contamination. At least an outer shell of the coating element shall in this regard be made of the base material or a similar one.

Still further, advantageously, a very reliable and accurate coating operation may be performed. Particularly, a very even coating face may be provided by means of the arrangement of coating elements, which is important to achieve a good coating result and improve accuracy in geometry of the component to be manufactured by e.g. a good control of layer thickness and homogeneity. Expediently, the coating elements and thus the coating face are moved in or directly above the manufacturing plane for a coating operation.

In other words, the coating mechanism as presented allows for the compensation of build failures of the component to be manufactured during buildup, wherein a build job may not have to be interrupted, e.g. when a part of the component protrudes over the manufacturing plane. This allows for a time and cost-efficient additive manufacturing process, which is particularly important as the additive manufacture of complex parts may last hours or even several days.

In an embodiment, the coating elements are arranged in-line, e.g. along a longitudinal axis of the coating mechanism. Said longitudinal axis may denote an axis of extension of the manufacturing plane, preferably an axis orthogonal to the direction of the coating movement (cf. coating direction below) of the coating mechanism. Preferably, the coating elements are borne, e.g. at suspension, such that they cannot collide with each other.

Due to this in-line arrangement, a coating face may be provided (cf. above), wherein at the same time, the coating mechanism and/or the coating face may be embodied obstacle tolerant (cf. above).

In an embodiment, the set of coating elements is configured to form a coating face which moves over the manufacturing plane when the coating mechanism is in a coating operation, e.g. for coating, depositing or distributing a portion of powdery base material on the manufacturing plane.

In an embodiment, the deflection position is determined by a dimension of the obstacle and/or a distance, the obstacle protrudes over the manufacturing plane. Thus, the coating mechanism gives way to the obstacle only in an extent which is actually necessary.

In an embodiment the coating elements are rotatable and/or displaceably borne at the suspension. Preferably, the coating elements are borne along a common axis of rotation, e.g. at the suspension. In this way, it is possible to embody the coating elements in order to define the coating face.

In an embodiment the coating mechanism comprises a spring mechanism. By means of said spring mechanism, it can be easily achieved that, preferably each of, the coating elements is embodied deflectable to the required extent.

In an embodiment, the spring mechanism is configured such that the coating elements are deflectable or rotatable against a spring force of the spring mechanism, wherein the spring force tends to move one of the coating elements back to the coating position when the coating mechanism is in operation.

Particularly, the respective coating element which has been deflected by the obstacle is - after having passed the obstacle - moved back into the coating position by the spring mechanism. Accordingly, the spring mechanism may comprise any expedient spring arrangement, preferably a spring for each of the coating elements, e.g. a spiral spring.

In an embodiment, the coating mechanism comprises a stop, wherein the coating elements are arranged to abut the stop in the coating position. As an advantage, the stop defines the coating position or an end position in or according to which the coating elements form the coating face. According to this embodiment, the spring mechanism preferably tends to move each of the coating elements towards said stop.

In an embodiment, preferably each of the coating elements comprise a tip which is - in an operation of the coating mechanism - preferably directed towards the manufacturing plane. The tip is preferably configured such that, when one of the coating elements is e.g. deflected from the coating position caused by an obstacle in the manufacturing plane, a powder layer to be deposited is not disrupted.

In an embodiment the coating elements are made of the same type of material as the base material, preferably a metal. E.g., if the component is to be manufactured from superalloys, the coating elements are preferably also made of superalloys in order to prevent contamination of the base material which is particularly important in the manufacture of turbine components which have to be highly durable to temperatures.

In an embodiment, the coating elements are made of exactly the same material as the material, the component is to be manufactured from. Thus, advantageously, any contamination of the component can be avoided.

In an embodiment, the coating elements form multi-segment coating blade.

In an embodiment, the coating mechanism comprises an auxiliary coating element which is arranged to extend along at least some of the coating elements. The auxiliary coating element allows for a (further) improvement of the coating quality. Preferably, the auxiliary coating element extends along all of the coating elements and/or the "line arrangement" thereof.

In an embodiment, the auxiliary coating element is configured non-movable. Thus, the auxiliary coating element may be a monolithic scraper blade.

In an embodiment, the auxiliary coating element is arranged offset or remote from the manufacturing plane and/or from the set of the coating elements in a coating direction. Thus, the distribution of base material or spreading of powder may be improved and deposition quality can be optimised. Particularly the powder spreading quality as described may be improved and powder splashes during the collision of any of the coating elements during coating, e.g. when a coating element has collided with an obstacle (cf. above) and recoils back into the coating position can be prevented.

In an embodiment, the set of coating elements is a first set and the coating mechanism comprises a second set of coating elements being arranged offset from the first set in the coating direction. The second set of coating elements preferably enables to (further) improve the coating result, particularly to achieve a flat and even powder surface by the coating operation, even if collision of any of the coating elements with the mentioned obstacle(s) occurs.

The first set of coating elements preferably resembles the second set of coating elements. In other words, the coating elements of the first set expediently resembled the coating elements of the second set and function in the same way.

In an embodiment, the second set is offset from the first set along a direction perpendicular to the coating direction by a distance of e.g. half of the width of a coating element.

A further aspect of the present invention relates to an apparatus comprising the coating mechanism and a guiding unit, such as a robot arm for guiding and/or passing the coating mechanism over a bed of the base material for the additive manufacture of the component.

In an embodiment, the apparatus is a coater for the additive manufacture of components from a powder bed, such as by selective laser melting.

A further aspect of the present invention relates to a device, such as an additive manufacturing device comprising the apparatus as described.

Advantages relating to the described mechanism, the apparatus and/or device may as well pertain to the component.

Further features, expediencies and advantageous refinements become apparent from the following description of the exemplary embodiment in connection with the Figures.
Figure 1 shows an exemplary embodiment of a coating mechanism in a perspective view according to the present invention.
Figure 2 shows a schematic side or sectional view of parts of the coating mechanism.
Figure 3 shows a schematic side or sectional view of the coating mechanism illustrating its operation.
Figure 4 shows a schematic side view of the coating mechanism in combination with the additive manufacture of a component.
Figure 5 shows a schematic top view of the coating mechanism according to another embodiment.

Like elements, elements of the same kind and identically acting elements may be provided with the same reference numerals in the Figures.

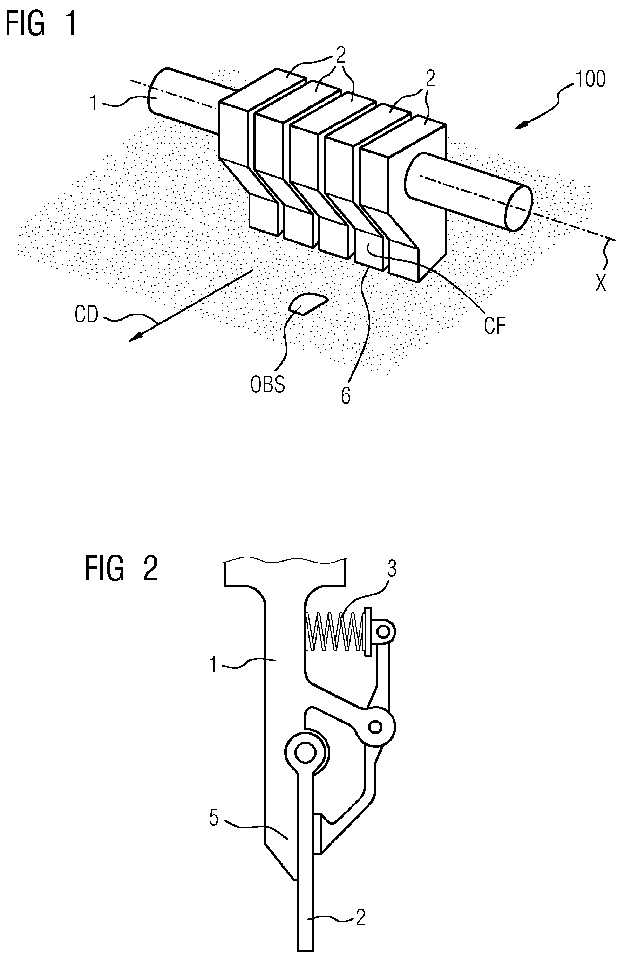

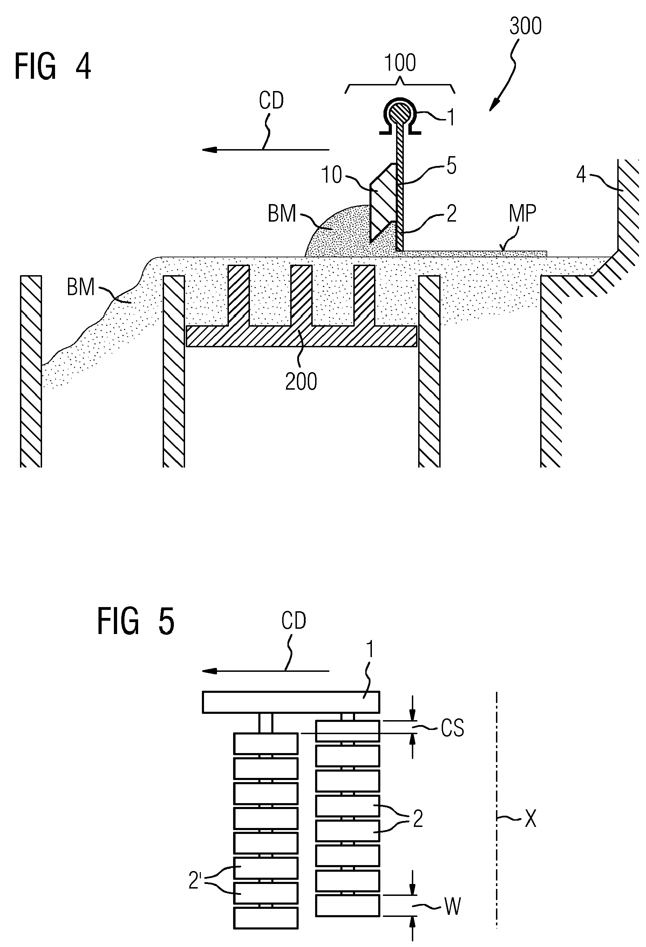

Figure 1 shows a coating mechanism 100. The coating mechanism 100 is preferably part of a coater for an additive manufacturing device, such as selective laser melting device for the additive buildup of a component 200 (cf. Figure 4 below). The component 200 preferably pertains to a component for turbo machines, such as gas turbines.

The coating mechanism 100 comprises a suspension 1. The suspension 1 may be a bar or any other facility which is preferably movable or actuatable in a coating direction CD during an operation of the coating mechanism 100.

The coating mechanism 100 may exhibit a "multi-segment" coating blade for the additive manufacture of components as described.

The coating mechanism 100 further comprises a plurality of coating elements 2. Exemplarily, five coating elements 2 are depicted in Figure 1. The coating elements 2 are arranged in-line, wherein said arrangement defines a coating face CF. The coating elements 2 are further borne at or around the suspension 1.

The coating elements 2 are preferably independently movable, preferably deflectable or rotatable with respect to each other and/ or the suspension, for example. Preferably, the coating elements 2 are suspended such that the coating elements 2 cannot contact each other or interfere in their movements, e.g. during an operation of the coating mechanism. Each of the coating elements is preferably a rigid and non-flexible component, when taken alone.

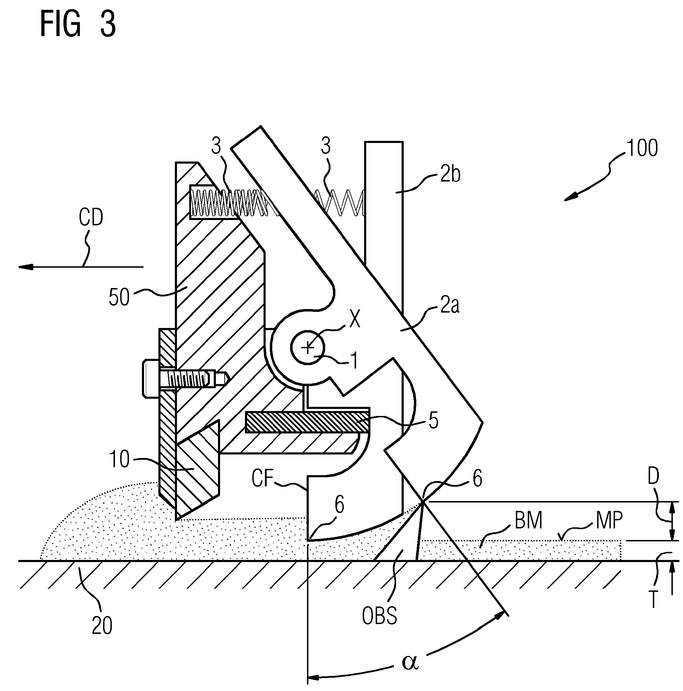

Each of the coating elements 2 preferably comprises a tip 6 by means of which a base material BM, preferably a powdery substance may be distributed or spread onto the manufacturing plane MP for coating and subsequently building up of the component 200 therefrom (see Figures 3 and 4 below).

Apart from the illustration of Figure 1, the coating elements are preferably arranged tightly, preferably powder tight, together in order to allow for an - as much as possible - continuous coating face CF and thus an expedient coating operation.

Advantageously, the multi-segment embodiment of the coating mechanism with a plurality of coating elements 2 allows for a reliable and accurate coating, whereas at the same time, the coating mechanism 100 may be embodied obstacle-tolerant and easy to service.

Figure 2 shows a perspective side or sectional view of an exemplary coating element 2 in more detail. It is particularly shown, that the coating element 2 comprises a thin and elongate blade, rotatably borne at the suspension 1. The suspension 1 may be or comprise a robot arm being movable and/or computer-controlled in order to move over the manufacturing plane (cf. below).

The coating element 2 is shown particularly in a coating position and, thus, in abutment with a stop 5.

The stop 5 may be provided at the suspension 1. Alternatively, the stop 5 may be provided at an apparatus as described below. Further, a spring 3 is shown which tends to move the coating element to towards the stop 5. As will be shown in more detail in Figure 3, the coating element is particularly deflectable against a force of the spring 3 from the coating position into a deflection position, when the coating elements is colliding with an obstacle (see numeral OBS below) in an operation of the coating mechanism 100.

Figure 3 indicate an operation of the coating mechanism 100 in that a coating operation is indicated. The coating mechanism is shown in a slightly different embodiment as compared to Figure 2.

A build plate or platform 20 is shown which is, preferably, a conventional platform for the additive manufacture of components by powder bed methods, such as selective laser melting (SLM).

As shown on the right, the platform 20 has already been (partly) deposited with a layer of a powdery base material BM, e.g. at a thickness T of 40 µm. Shown next to said layer, in the middle of the picture, an obstacle OBS is shown which protrudes over a manufacturing plane MP by a distance D.

The manufacturing plane MP is preferably defined by the coating mechanism 100 or as the case may be, by the tips 6 of the coating elements 2 according to the adjusted powder thickness.

The obstacle OBS may be formed by a section of the respective component to be manufactured. The obstacle OBS is preferably an unwanted phenomenal and accounts for an erroneous additive buildup or thermal deformation.

When sweeping over the manufacturing plane MP for the layerwise coating or deposition of a new base material layer, the coating mechanism 100, e.g. driven by the suspension 1, the coating mechanism, or at least one or some of the coating elements may collide with the obstacle OBS, as shown, as said obstacle OBS protrudes over the manufacturing plane MP. Due to the suspension of the coating mechanism 100, the respective coating element (cf. numeral 2a in Figure 3) which passes and hits the obstacle OBS (this may be a plurality of coating elements), are deflected from the coating position into a deflection position defined by the dimension of the obstacle OBS. More particularly, the deflection position is defined, e.g. as compared to the coating position, by the distance D, the obstacle OBS protrudes over the manufacturing plane MP.

The deflection position may be defined by an angular displacement according to an angle α from the coating position at which the coating elements abut the stop 5.

Provided that the coating elements are rotatably deflectable around an axis of rotation X, the distance from said axis to the tip 6 of the coating elements defines a radius (not explicitly indicated. Said radius may amount to 5 mm for example. Accordingly, said angle α may amount to 37°, for example.

According to an alternative embodiment, said coating elements and/or the coating mechanism 100 may be configured such that the radius amounts to 10 mm. Accordingly, the mentioned angle α of deflection of may amount to 25°.

When, in the operation of the coating mechanism 100, the coating elements overwind or pass the obstacle OBS, said coating elements 2 are again recoiled or moved back into the coating position driven by the forces of the spring(s) 3. The springs 3 may be part of the spring mechanism.

After the obstacle OBS has been passed, the original and intended layer thickness is again attained or adopted by the coating mechanism 100 and the coating according to the intended thickness T may be continued, as if the obstacle OBS wouldn't have been present in the manufacturing plane MP. To this extent, the mentioned coating mechanism 100 may compensate for buildup failure without causing disruption to the manufacturing process and/or damage of the respective coater and/or manufacturing device.

Those coating elements (cf. numeral 2b in Figure 3) which are - due to their arrangement - not colliding with the obstacle OBS, expediently remain in the coating position, when the obstacle is passed by the coating mechanism.

The coating mechanism 100 further comprises a blade 10 which is preferably arranged in front of the coating mechanism in the coating direction. Said blade 10 preferably extends over at least some, preferably all of the coating elements in a direction perpendicular to the coating direction (line arrangement of coating elements). Preferably, the blade 10 is configured non-movable.

By means of the blade 10, e.g. powder splashes caused by the repulsive movement of the coating elements 2 after an obstacle OBS has been passed, may advantageously be prevented. The blade 10 may be arranged, as shown, slightly offset from the manufacturing plane. By means of the offset, is prevented that the blade collide with the obstacle in a coating operation stop

According to the described embodiments, the coating elements 2, 2a, 2b are preferably rotatable or rotatably deflectable around an axis X of rotation.

It is further shown in Figure 3 that the blade 10 as well as the coating elements 2 and/or the suspension 1 are fixed or part of an apparatus 50. Said apparatus 50 may comprise or exhibit a guiding unit by means of which the coating mechanism is guided, or moved over the manufacturing plane.

Figure 4 shows a schematic sectional view of the apparatus 50 and the coating mechanism 100 as described above. The apparatus 50 is preferably applied in a device 300 for additive manufacturing which is also at least partly shown in Figure 4. Said device 300 may be a device for selective laser melting.

In contrast to the illustration of Figure 3, e.g. a component 200 is shown in Figure 4. The component 200 has been manufactured from the base material BM in the respective powder bed. For a coating operation, the apparatus 100 is again moved according to the coating direction (from right to left in Figure 4), wherein the base material BM is distributed onto the manufacturing plane MP. Figure 4 just indicates a common operation of the "coater" in a powder bed based additive manufacturing process. It is further shown in the embodiment of the coating mechanism 100 in Figure 4 that the blade 10 effects as the stop 5 as described for defining the coating position of the coating elements 2.

Figure 5 shows an alternative embodiment of the presented coating mechanism 100. Particularly, it is shown that the coating mechanism comprises a first set of coating elements 2. Further, the coating mechanism 100 comprises a second set of coating elements 2'. Preferably, the first set of coating elements 2 resembles the second set of coating elements 2'.

The second set of coating elements 2' is arranged offset from the first set of coating elements, e.g. by a distance or offset OS according to half the width W of each of a coating elements.

At least, the interfaces between the coating elements of the first set are offset from those of the second set. This advantageously allows for a further improved coating result and ensures flatness of the respectively desired powder surface, as it is compensated for inaccuracies in that the position caused by the interspaces of the coating elements 2 of the first set for example. The provision of the 2^{nd} set is particularly expedient, as the coating mechanism necessarily comprises interspaces due to manufacturing tolerances and the requirement of mutual mobility of the coating elements 2.

The second set of coating elements 2' is preferably also fixed to the suspension 1, e.g. at a certain distance in the coating direction.

According to the present invention, the coating elements 2, 2' are preferably made of the same type of material as the one the component is intended to be manufactured from. In case of gas turbine components, the coating elements may be made of the same (super)alloy as said component. This advantageously allows for the avoidance of contamination of the component which is particularly important in the manufacture of turbine components, such as components of the flow path hardware of gas turbine. Therefore it expedient, if at least the material of the coating elements is made of a high melting point material, such as a refractory metal or the coating elements are coated with a capping of the same material as the respective base material for the manufacture.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Coating mechanism (100) for additive manufacturing comprising:
- a suspension (1), and
- a set of coating elements (2, 2a, 2b) which are arranged and configured to coat a manufacturing plane (MP) with a base material (BM) for the additive manufacture, wherein the coating elements (2, 2a, 2b) are coupled to the suspension (1) such that the coating elements (2, 2a, 2b) are independently deflectable, from a coating position into a deflection position, when, in an operation of the coating mechanism (100), the respective coating element (2, 2a, 2b) collides with an obstacle (OBS) in the manufacturing plane (MP).

2. Coating mechanism (100) according to claim 1, wherein the coating elements (2, 2a, 2b) are arranged in-line and wherein the set of coating elements (2, 2a, 2b) is configured to form a coating face (CF) which moves over the manufacturing plane (MP) when the coating mechanism (100) is in operation.

3. Coating mechanism (100) according to claim 1 or 2, wherein the deflection position is determined by a distance (D) the obstacle protrudes over the manufacturing plane (MP).

4. Coating mechanism (100) according to one of the previous claims, wherein the coating elements (2, 2a, 2b) are rotatably borne at the suspension (1).

5. Coating mechanism (100) according one of the previous claims, comprising a spring mechanism (3), being configured such that the coating elements (2, 2a, 2b) are deflectable against a spring force of the spring mechanism (3), wherein the spring force tends to move the coating element (2, 2a, 2b) back to the coating position.

6. Coating mechanism (100) according to one of the previous claims, wherein the coating mechanism (100) comprises a stop (5), wherein the coating elements (2, 2a, 2b) are arranged to abut the stop (5) in the coating position.

7. Coating mechanism (100) according to one of the previous claims, wherein the coating elements (2, 2a, 2b) are made of the same type of material as the base material (BM), preferably a metal.

8. Coating mechanism (100) according to one of the previous claims, comprising an auxiliary coating element (10) which is arranged to extend along at least some of the coating elements (2, 2a, 2b) and wherein the auxiliary coating element (10) is configured non-movable and arranged offset from the manufacturing plane (MP) and from the set of the coating elements (2, 2a, 2b) in a coating direction (CD).

9. Coating mechanism (100) according to one of the previous claims, wherein the set of coating elements (2, 2a, 2b) is a first set and the coating mechanism (100) comprises a second set of coating elements (2') being arranged offset from the first set in a coating direction (CD).

10. Coating mechanism (100) according to claim 9, wherein the second set is further offset from the first set along a direction perpendicular to the coating direction (CD) by a distance (OS) of half of the width of the coating element (2, 2a, 2b, 2').

11. Apparatus comprising (100) the coating mechanism (100) according to one of the previous claims further comprising a guiding unit for guiding the coating mechanism (100) over the manufacturing plane (MP) for the additive manufacture.

12. Apparatus (50) according (100) to claim 11, being a coater for the additive manufacture of a component (200) from a powder bed, such as by selective laser melting.

13. Device (300) comprising the apparatus (50) according to claim 11 or 12.
